# EUROPEAN PATENT APPLICATION

(11) **EP 3 109 659 A1**
(43) Date of publication of application: **28.12.2016**
(21) Application number: 15447009.0
(22) Date of filing: 24.06.2015
(51) Int. Cl.: G01S 5/00, G08G 3/00

(54) **SATELLITE FISHING SURVEILLANCE CONSTELLATION AND METHOD**

(71) Applicant: M&M Corporation Comm. VA, 3053 Haasrode (BE); Institut von Karman de Dynamique des Fluides, AISBL, 1640 Rhode Saint Genèse (BE)
(72) Inventor: Mergeay, Maurice François Georges, B-3053 Haasrode (BE); Thoemel, Jan, B-1180 Uccle/Bruxelles (BE)
(74) Representative: Beck, Michaël Andries T.

(57) **Abstract**

Systems, satellites and methods are described relating to low earth orbital (LEO) satellites for obtaining satellite surveillance images.

A system and process are described for searching and tracking illegal fishing vessels in a region having thousands of islands, a very lengthy coast line, heavy seasonal cloud cover, volcanic activity, a large sea area and large distances of thousands of kilometres.

## Description

The present invention relates to a system and method for searching and tracking illegal fishing vessels in a region having thousands of islands, a very lengthy coast line, heavy seasonal cloud cover, volcanic activity, a large sea area and large distances of thousands of kilometres. In particular, the present invention relates to systems, satellites and methods relating to low earth orbital (LEO) satellites for obtaining satellite surveillance images.

### BACKGROUND

It has been a natural progression for satellite technology to go for large payloads of satellites designed for long operation times due to the cost of developing and launching a satellite. Commercial exploitation of most satellites has been for military defence or telecommunications although weather and climate studies have also been enriched by satellite data. Global Navigation Satellite Systems (GNSS), such as GPS (originally motivated by military use), have provided a significant improvement in logging data where position is important.

Vessel surveillance such as monitoring illegal fishing can have an important impact on economics of a country. However, satellite surveillance in a region having thousands of islands, volcanic activity, a very lengthy coast line, heavy seasonal cloud cover, a large sea area and large distances of thousands of kilometres is not straightforward. An example is Indonesia with a north-south dimension of more than 1000 km, an east-west dimension of more than 4,000 km, a sea surface area of over 90,000 km², and a coast line of more than 50,000 km. Indonesia is an equatorial archipelago located in Southeast Asia and Oceania made up of over 17,000 islands and islets of which only about 6,000 are inhabited, leaving thousands of island hiding places for illegal fishing boats.

Indonesia Weather is equatorial and tropical, generally hot and humid throughout the year, daily (brief) rainstorms being common (resulting in cloud cover), and the rainy season running from mid-December through to March (with higher cloud cover at this time). Indonesia has 150 active volcanoes, including Krakatoa, Tambora, and Toba, whose emissions can also reduce visibility. Indicative of the high rainfall and cloud cover are the rain forests such as on Sumatra, Borneo and Papua, the second largest tropical forests in the world. In addition weather conditions remain difficult to predict with accuracy.

Computing systems can process vast amounts of data, however there still exist significant difficulties in the existing systems for capturing relevant data for tracking illegal fishing.

The cost of satellite systems is dependent upon the number of satellites used. Reducing costs by having fewer satellites in orbit limits the number of observations at a particular position on the earth's surface that can be made within a given time period. This is a severe disadvantage when measuring a highly dynamic situation such as illegal fishing. Satellites must communicate with ground stations, which requires line of sight between the satellite and ground station. Non-geosynchronous orbiting satellites are within line of sight of a ground station only for a limited period of time, which may result in delays in the delivery of data. Delay can mean that illegal fishing vessels can evade capture.

Certain large vessels include automatic beacons that periodically broadcast/announce certain information about each vessel using select frequencies such as the Automatic Identification System (AIS), mandated for use on all international vessels over 300 tons, cargo vessels over 500 tons and passenger ships of all sizes. On board AIS transceivers automatically broadcast a message containing data on a ship's identity, speed, heading and navigational status.

A spaced based receiver for AIS tracking (S-AIS) operates over a distance of 1000 km in the vertical direction - in the range of low earth orbit satellites. As AIS transceivers on different ships use the same broadcast frequency within the same broadcast area it is possible to disrupt surveillance by broadcasting AIS signals at the same time from different ships resulting in collisions between signals.

Surveillance can be improved by a satellite's field of view and/or increasing the observation time over a given area. However, limiting the field of view would need to be compensated for by increasing the time required for a satellite to monitor an area resulting in more scans being needed for any particular area.

It can be assumed that illegal fishing boats might well not use AIS, so the problem is not only to detect AIS signals but also to identify vessels not broadcasting AIS that are carrying out illegal fishing activities. This requires satellite images which, however, become difficult to capture at night or with cloud cover.

The world fishing fleet numbers over 4.5 million vessels. About one-third is decked while the remaining two-thirds are undecked and are generally less than 10 m in length. Most of these smaller boats are not fitted with mechanical propulsion systems. Of the undecked and non-motorized vessels it is estimated that Asia accounts for over 80 percent of them. The total fleet in Asia is the largest accounting for 68 percent of the global fleet.

The average size of decked vessels remains about 20 tonnes typically around 10-15 metres in length. Those larger than 100 tonnes are usually longer than 24 m but they represent a very small percentage of the world fishing fleet. One Asian country has approximately 50 percent of these larger vessels, while no other country has more than 10 percent of this fleet. However these larger boats probably represent a greater threat of illegal fishing operations.

### SUMMARY OF THE INVENTION

It is therefore an object of the present invention to provide a system, a nanosatellite and a method of nanosatellite surveillance of illegal fishing vessels and other features such as vegetation, ocean currents and algae blooms.

Embodiments of the present invention use data recorded by nanosatellite such as visual, infra-red or multi-spectral images and video and radar as well as optionally sea-based and ground-based monitoring systems such as visual imaging, radar and wireless telecommunications. The nanosatellites are positioned in low earth orbits of 200-1000 km above the surface and complete their orbit in approximately 90 minutes.

An aspect of embodiments of the present invention relates to launch of a number of LEO nanosatellites.

Embodiments of the present invention include one or more terrestrial ground stations connected to a telecommunications network for communicating with the LEO nanosatellites.

Surveillance is improved by using a fleet of nanosatellites with a small inclination - for example less than 25° preferably less than 15°, e.g. 10 to 15° or 10° to 12°.

In one aspect the present invention provides a system for tracking seagoing vessels wherein at least some of the vessels transmit an identifying signal, the system comprising:
a constellation of nano-satellites being equipped with imaging equipment for imaging the Earth's surface and a receiver for receiving the identifying signals of said vessels via a first transmission link; the satellites having an inclination of less than 25° preferably less than 15°,
a second transmission link to at least one ground station for communicating with said constellation of nanosatellites wherein the second transmission link delivers data collected from said vessel transmissions and imaging data from the nanosatellites; and
a computer processor receiving input from said first and second transmission links and programmed to acquire and track positions of fishing vessels based on presence or lack of said identifying signals transmitted by said vessels and said imaging data from the nanosatellites.

Ground based radar, wireless telecommunications data and visual images from surveillance ships, aircraft and/or buoys can also be used by a computer processor to acquire and track positions of fishing vessels in addition to the identifying signals transmitted by said vessels and imaging data from the nanosatellites.

In a further aspect of the present invention, a nanosatellite can include a programmable computer with various inputs such as visual, panchromatic, multi-spectral, black/white and/or IR and/or UV cameras or imagers as well as data from radar and wireless receivers and/or other sensors and peripheral devices. The computer can execute an application to record any such data and for transmitting data to the one or more ground stations. One application is to track and record movements of sea-going vessels.

The one or more ground stations also have computer systems able to coordinate the data of different nanosatellites, surveillance ships, aircraft or buoys as well as ground based installations, e.g. with radar surveillance equipment. Preferably at least one ground station maintains communications with at least one of the orbiting nanosatellites. Data received at one ground station is transmitted automatically to the other ground stations. The nanosatellites are preferably adapted to transmit and receive "Synthetic aperture radar" = SAR. To create a SAR image, successive pulses of radio waves are transmitted from one or more nanosatellites to "illuminate" a target scene, and the echo of each pulse is received and recorded. The pulses are transmitted and the echoes received using, for example, a single beam-forming antenna, with wavelengths used anywhere from a meter down to millimeters. As the SAR device on board the nanosatellite moves with the nanosatellite, the antenna location relative to the target changes over time. Signal processing of the recorded radar echoes allows it then to combine the recordings from the multiple antenna locations - this forms the synthetic antenna aperture, and allows it to create finer resolution images than what would be possible with the given physical antenna aperture.

The nanosatellites in low earth orbit can also be equipped to receive GNSS, e.g. GPS signals as well as receivers capable of receiving identification signals such as transponder signals, e.g. AIS or similar signals for use in tracking and monitoring vessel movements. The nanosatellites also can have optical and IR sensors and cameras to capture imaging data.

The one or more ground stations and optionally the nanosatellites in low earth orbit may also be adapted to receive data from or to transmit to surveillance aircraft, surveillance vessels or buoys related to the tracking and monitoring of sea-going vessels such as fishing vessels. The ground stations and optionally the nanosatellites are adapted to capture images of ships, and their movements and to process these images in conjunction with signals collected from surveillance aircraft, sea-going vessels, and buoys as well as to receive landmark data to allow registration of the different sets of data.

The ground stations and the nanosatellites are adapted to identify suspect illegal fishing boats particularly as defined in the attached claims.

### BRIEF DESCRIPTION OF THE DRAWINGS

Figure 1 is a schematic diagram depicting the satellite constellation and ground based stations in accordance with an embodiment of the present invention.
Figure 2 is a satellite image showing cloud cover.
Figure 3 shows a schematic management system for launching and operating nanosatellites as used in embodiments of the present invention.

### DETAILED DESCRIPTION

### Nanosatellite constellation

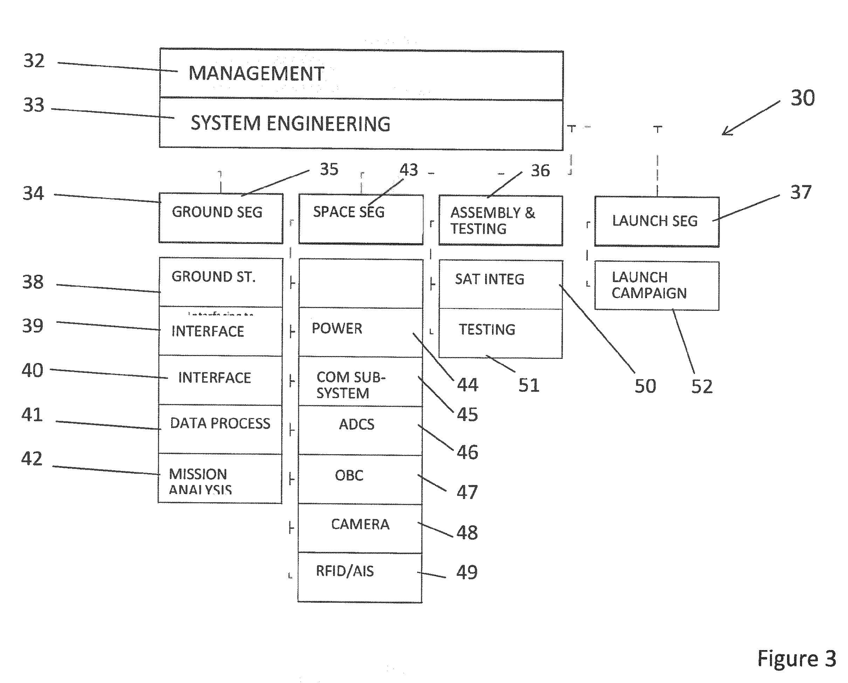

With reference to Fig. 3, a nanosatellite system 30 according to embodiments of the present invention can include:
A space segment 35 comprising:
   - a satellite constellation with, for example, between 18 and 42 nanosatellites;
   - attitude determination and control 46 with passive nadir pointing and optional target pointing upon ground request;
   - satellite size: for example 4-6 unit nanosatellites (10x20x20cm or 10x20x30cm) or nanosatellites up to 10 kg;
   - each nanosatellite has a physical structure 53, e.g. a frame for receiving cube nanosatellite units or subsystems, and optionally deployable elements such as one or more antennas, one or more solar panels, an optional deployable telescope for a camera, etc.
   - power subsystem 44;
   - sensors:
      primary sensor 48: visible imager with a resolution of better than 6 m on the ground, preferably better than 5m more preferably better than 3 m allowing to image during daylight at maximum cloud coverage of 50%;
      secondary sensor 49: transponder signals such as Automated Identification System (weather independent)

### Orbit:

- attitude: between 500-700 km
- inclination: < 25°
- attitude and orbital control 46: attitude control < 1°, station keeping using micropropulsion or aerodynamic manoeuvres optional.

### In-orbit processing:

- on board computer 47;
- discovery of unidentified and suspected vessels;
- in-orbit image processing;
- telecommunications subsystem 45 with intersatellite link for satellite control and data set exchange;
- verification of availability of AIS signal of identified vessel;
- creating of data sets with 1) a position of at least one unidentified vessel 2) imagery of suspected unidentified vessel, ship trajectory;
- follow-up to track illegal vessels or optionally to detect pollution problems or ecology on land as well as in or on the sea.

The ground segment 34 can include
- communication/network system and other operations 40;
- minimum 6 ground stations 38 at three different locations;
- ground processing subsystem 41;
- verification of data set with further available information 42
- user interface 39.

The management 32 includes systems engineering 33, assembly, integration and testing of the nanosatellites 36, 50, 51 as well as providing or obtaining launch 37 and launch campaign 52.

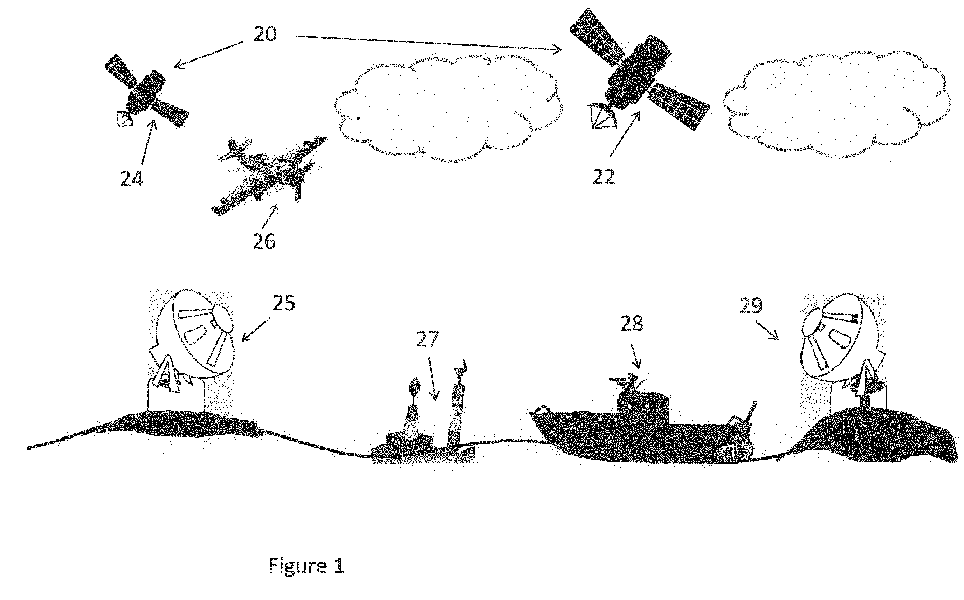

With reference to Figure 1, in accordance with embodiments of the present invention one or more nanosatellites 22, 24 in a constellation 20 are put into a low earth orbit with a low inclination of less than 25°, more preferably less than 15°, optionally 10 to 15° or 10° to 12°. Indonesia extends from about 11 ° North to 5° South, hence a low inclination LEO nanosatellite 22, 24 will cover the region required. Such a nanosatellite 22, 24 can be a CubeSat^{™} nanosatellite which is a relatively small satellite, e.g. of about 10 kg.

With reference to Figure 3, a CubeSat^{™} is a miniaturised satellite offering all the standard functions of a normal satellite such as attitude determination and control 46, uplink and downlink telecommunications provided by a communication subsystem 45, power subsystem 44 including a battery and body-mounted solar panels, on-board data handling and storage by a CPU and memory of an on-board computing system 47. Computing power can be provided by customised satellite boards such as provided by Xiphos Technologies, Canada. Nanosatellites have deployable solar panels, antennas or booms. Orbit control using micropropulsion can be provided. Transceivers for X-band and S-band telecommunications in addition to VHF/UHF and wireless data transfer can be provided. Each nanosatellite has a physical structure 53, e.g. a frame for receiving cube nanosatellite units or subsystems, and optionally deployable elements such as one or more antennas, one or more solar panels, an optional deployable telescope for a camera, etc.

The constellation 20 can combine a large number of nanosatellites 22, 24 into a network with at least some of the nanosatellites having identical sensors, imagers, processing power, software, firmware, transceivers, and antennas. Alternatively, most of the nanosatellites 22, 24 have identical sensors, imagers, processing power, software, firmware, transceivers, and antennas, but some of the nanosatellites 22, 24 have special functions such as a high resolution camera 49 for taking images that represent legally acceptable incriminating evidence of illegal fishing, nanosatellites with multispectral cameras and satelllites with Synthetic Aperture Radar (SAR) capabilities. Alternatively, once illegal fishing has been detected, high resolution images can be requested from high resolution cameras on board larger satellites such as WorldView, QuickBird, Pléiades, GeoEye, KompSat, EROS, Ikonos or equivalent.

To provide good ground coverage and a high repeat rate there is a number of orbiting nanosatellites 22, 24 such as 15 to 20, 10 to 50 nanosatellites 22, 24 in the constellation 20, each having an orbit with an inclination of less than 25°, preferably less than 15°. A LEO equatorial nanosatellite 22, 24 has an orbit time of about 90 minutes, and if the constellation has twenty nanosatellites then one nanosatellite 22, 24 passes over the region of Indonesia every 4 to 5 minutes. With an east-west dimension of more than 4,000 km and a nanosatellite ground speed of about 7 km/second, there will be 2 nanosatellites 22, 24 present over the region of Indonesia at any one time.

The nanosatellite 22, 24 can include a computer processor and a number of imagers, receivers and sensors in communication with the computer processor. These sensors can include any of, or some of, or all of a visual optical and/or or UV (Ultraviolet) and IR (infrared) sensors, visual optical and/or or UV (Ultraviolet) and IR (infrared), panchromatic and/or multispectral cameras, spectrometers, as well as radar and wireless receivers or transceivers. Any of the imaging equipment may comprise an image sensor with associated optics and scanning equipment which scans an image over the image sensor. Alternatively, any of, or some of, or all of the imaging equipment can include an array of imaging pixels and a complete image is recorded by the pixel array simultaneously.

For example, Space Systems Engineering, 8th floor Kluyverweg 1 2629 HS Delft, The Netherlands disclose plug-and-play cameras for earth orbit CubeSat constellations (http://www.delfispace.nl/advanced-concepts/nanosatellite-cameras). The instruments contain folded light-paths instead of deployable optical systems and is said to have ultra-stable opto-mechanical-thermal performance. The Advanced Nanosat Telescope 2a (ANT-2a) VIS camera captures high to medium spatial resolutions, i.e. 5 to 10 m on the ground, depending on the altitude. The design is based on a Ritchy-Chretien Cassegrain (RCC) system with a much larger aperture and an improved Signal-to-Noise Ratio (SNR). The ANT-2b is based on a Three Mirror Anastigmat (TMA) system to serve applications which require a large coverage. It offers a ground resolution of 25 meters at 500 km altitude. The larger relative aperture enables a higher SNR to capture multiple narrow wavebands and multi-spectral imaging performance.

The Advanced Remote-sensing CubeSat Thermal Infrared Camera (ARCTIC-1) is an off-the-shelf IR camera to comply with the CubeSat standard. The passively cooled ARCTIC-1 provides EO monitoring within the deep IR spectrum of 9 to 11 micron. Due to the diffraction limit at these wavelengths, the ground resolution remains limited at 65.8 m at a Low Earth Orbit (LEO) altitude of 500 km at a NEDT of about 100 mK.

Planet Labs of San Francisco California, USA report high resolution cameras with 3 to 5 meters per pixel resolution.

Although fixed camera systems are preferred, embodiments of the present invention include deployable telescopes for use with image sensors or cameras. For example, a strain deployable Ritchey Chrétien Cassegrain telescope truss concept has been described by NASA being a 152.4 mm aperture f/8 telescope having a 1250 mm focal length that integrates within a standard 6 unit nanosatellite. The telescope initially occupies a volume of only 1U x 4U (one unit by four units of a nanosatellite) and then extends after orbit insertion. Carbon composite coiling strain members provide the energy needed for deployment while a deployment mechanism controls both the deployment rate and final tensioning force to rigidize the structure. The 152.4 mm f/8 telescope front end can be used with a high resolution camera.

The article "Very High Resolution Imaging Using Small Satellites" by Andrew Cawthorne, David Purll and Stuart Eves, AIAA/6th Responsive Space Conference 2008 discloses a multispectral camera with 2.5m resolution in the panchromatic channel and 5m resolution in four Landsat-type bands, R, G, B and NIR in a swath width of 20km. This is said to represent the state of the art for 300kg class satellites. Embodiments of the present invention have CubeSat type satellites (e.g. 10kg) in a constellation and the present invention includes the use of one or more larger satellites for example in the range 150 to 400kg to carry out specific duties such as high resolution multispectral imaging or SAR imaging. Such larger satellites can be used, for example, for tracking after the search phase has detected a possible illegal fishing vessel. Assuming a vessel fishing speed of about 0.5 to 5 metres per second (1 to 10 knots), such a ship will travel between 2.7 km and 13.5 km within the 90 minute orbit time of such a satellite. Thus the vessel will stay within one 40 km x 40 km surveillance area and can be picked up again by a following satellite. Once a vessel has been searched it can be tracked by a single such larger satellite. For example if the wake of the ship is detected using SAR, its new position can be determined by following the signature of the wake.

The data collected by the nanosatellite 22, 24 (raw data) can be transmitted directly to one or more ground stations 25 but it is preferred if the data may first be pre-processed in the nanosatellites 22, 24 before transmission. In particular the data may be compressed or may be simplified to reduce bandwidth requirements between the nanosatellite 22, 24 and the ground station 25. For example unnecessary data can be stripped out of the images, e.g. landmass which is not relevant to fishing surveillance.

The nanosatellites 22, 24 may be adapted to operate "Synthetic aperture radar" = SAR. To create a SAR image, successive pulses of radio waves are transmitted to "illuminate" a target scene, and the echo of each pulse is received and recorded. The pulses are transmitted and the echoes received using a single beam-forming antenna, with wavelengths used anywhere from a meter down to millimetres. As the SAR device on board the nanosatellite 22, 24 moves, the antenna location relative to the target changes over time. Signal processing of the recorded radar echoes allows it then to combine the recordings from the multiple antenna locations - this forms the synthetic antenna aperture, and allows it to create finer resolution image than what would be possible with the given physical antenna aperture.

As SAR involves the transmission of electromagnetic energy, its use can be detected from the ground. This can be used as a deterrent and warning to illegal fishers that they are being monitored. A SAR arrangement suitable for small satellites is disclosed in "NanoSAR - case study of synthetic aperture radar for nano-satellite", Engelen et al, 63rd International Astronautical Congress, Naples, Italy, 2012. The proposed SAR system uses coded pulses to increase signal to noise ratio, an antenna of 1.14 metres by 0.18 meters and a frequency of 5.8 GHz. The pulse duty cycle is 2%, and a code length of 4000 chips is used. Resolution is 10 metres with swath width of 60 km. Embodiments of the present invention include the option of one or more nanosatellites having a nano-SAR capability with a resolution of 10 metres. SAR requires considerable power as the return signal is a scatter signal. The nano-SAR would only be switched on during flyby - the rest of the orbit would be used to gain energy from the solar panels. Electrical power can be stored in batteries and ultra-capacitor.

Accordingly, the nanosatellite 22, 24 can have solar panels and batteries for generating, regulating and powering the nanosatellite electronics and on-board devices. The nanosatellite 22, 24 will also have any and all necessary antennas or antenna arrays e.g. for wireless telecommunications, e.g. X-band, S-band, VHF, UHF, and for receiving GPS signals, and for receiving identification signals such as AIS, etc. from sea-going vessels and optionally for receiving nano-SAR. Signals from or to an antenna or an antenna array are processed by an on board transceiver, configured to manage and implement all incoming and outgoing communications to the nanosatellite 22, 24. Also X-band or S-band signals from or to an antenna or an antenna array are processed by a suitable transceiver on board and configured to manage and implement all incoming and outgoing X-band or S-band communications to the nanosatellite 22, 24. The X-band or S-band may particularly be used for inter-satellite communications. The nanosatellite 22, 24 is equipped with all command and data handling software and subsystems needed for managing and reporting the on-board satellite operations.

The nanosatellite 22, 24 is also equipped with a flight control system and computer that manages aspects of the flight of the nanosatellite 22, 24 including its deployment and orientation. The nanosatellite 22, 24 is preferably 3-axis stabilised. To achieve this controllable motors are provided as well as, for example, all necessary inertial or reaction wheels such as a gyroscope, and optionally accelerometers which allow full control over the orientation of the nanosatellite 22, 24 and hence the region that can be imaged on the ground. A nanosatellite 22, 24 can have an imaging footprint of several tens of km², for example, e.g. a visual image taken for a region of 40 km x 40 km or an SAR image of 60km x 60km. With existing visual cameras this allows a resolution from several metres down to 1 metre. The present invention in some embodiments includes the use of on-board cameras or imagers with a resolution of 7 metres or less, e.g. 3 to 5m. The present invention includes planned obsolescence of nanosatellites with launching of new satellites with updated technology. It is assumed therefore that camera weight will be reduced and resolution will be improved with time. The nanosatellites 22, 24 have all subsystems for guidance, navigation and control of orbit and attitude determination and control, and the positioning and pointing of the nanosatellite cameras, imagers and antennas.

The ground stations 25 also have transceivers e.g. for X-band, S-band, VHF, UHF, cellular wireless telecommunications as well as a computer and network system for controlling access to and communications from the nanosatellites 22, 24 and communicating with other ground, sea or airborne vehicles 25-29 as well as for processing all data. Typically, the computer system will be connected to the Internet or to another wide area data network. In particular at least one the ground stations 25 will receive mapping or chart data from any, or some or all of the nanosatellites 22, 24, ground radar stations 29, surveillance aircraft 26 and boats 28, and buoys 27 and will register the different mapping or chart data to provide internal consistency e.g. by registering landmarks visible in different images. This will require spatially and temporally synchronizing the mapping or chart data. For this reason, all data and images collected from the nanosatellites 22, 24, ground stations 25, 29, surveillance aircraft 26 and boats 28, and buoys 27 will preferably be time stamped and geographically localised.

### Cloud cover and feature recognition

In order for surveillance to be maintained during times of cloud cover, image processing in the nanosatellite 22, 24 and/or in the ground station 25 detects clouds. Clouds have a different reflectance characteristic compared to land or sea and hence can be detected by spectral or contrast differences. One or more of the nanosatellites 22, 24 can include one or more on-board digital cameras for capturing images within a variety of spectra such as the visible spectrum, panchromatic, IR, UV or multispectral. The ground cannot be monitored visually by nanosatellites 22, 24 when there is cloud cover using cameras in the visual spectrum. Illegal fishers may make use of cloud cover to avoid detection. However, cloud is usually moving continuously such that the regions where clouds are present or absent are continually changing. An advantage of the constellation 20 of low earth orbit nanosatellites with an inclination less than 25°, e.g. 10 to 15° is that nanosatellites 22, 24 traverse the relevant regions over Indonesia with spacings of a few minutes and, hence, can make use of any change in the cloud cover. Once image processing in the nanosatellite 22, 24 and/or in the ground station 25 has detected cloud, a suitable processor in the ground-based network can access data from any, some or all of the ground stations 25, ground radar stations 29, surveillance aircraft 26, cellular wireless base stations (not shown), surveillance boats 28, and buoys 27 and can monitor the parts of the ground not covered by the nanosatellites 22, 24 by using whatever data is available from other sources. GPS data and time stamps can be used to stitch different images together. Thus, data from cameras, sensors, wireless telecommunications devices such as mobile phones, radar monitors and other sensors can be used to complete the images not observable by the satellites 22, 24 because of cloud or other airborne materials such as volcanic ash or smoke from fires. The completed images can then be analysed for possible illegal fishing vessel locations. These completed images can be analysed to capture the trajectories of vessels that might be illegal fishing boats, e.g. to track those that had been identified visually before the cloud cover occurred. Thus, embodiments of the present invention continuously produce the best possible fit of spatially and temporally synchronized, augmented nanosatellite collected data and images.

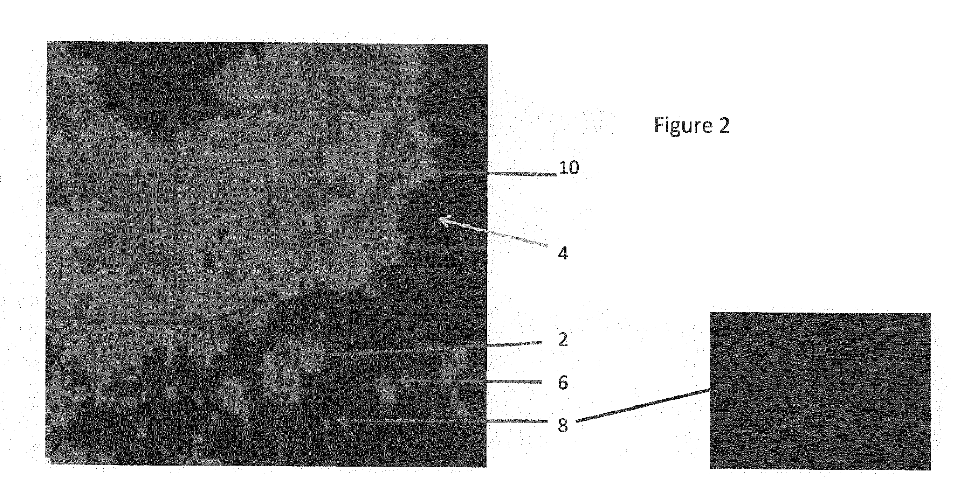

On-board image processing in the nanosatellite 22, 24 or in a ground station 25 can detect clouds, ash or dust. It is preferred if regions of clouds ash or dust are defined by a highly compressed coding scheme. For example it is preferred that in embodiments of the present invention, that a definition of contours of cloud, dust or ash are determined and used for transmission rather than transmitting full images. This reduces the bandwidth necessary and is much more efficient than transmitting full images. In embodiments of the present invention contours of cloud, ash or dust regions are defined by contour pixels which are coded by conventional means to form contour output data which can be output as a bit stream. Figure 2 shows an image with regions where there is just water and where there is a clear distinction between cloud and water (4), regions of heavy cloud (10), a possible fishing boat (8) and larger structures of unknown nature (2 and 6). From existing charts, for example feature 6 is known to be an island and hence can be ignored. Accordingly, on-board image processing in the nanosatellite 22, 24 or in a ground station 25 allows reduction in the amount of data that is transmitted from nanosatellites 22, 24 to ground stations 25 or between nanosatellites 22, 24. Contour pixels are those pixels at the edge of a cloud which can be determined by a thresholding technique based on cloud reflectivity values. The contour pixels of the cloudy region 10 provide a much more efficient way to describe the cloud mass compared to transmitting a high definition image.

Embodiments of the present invention can make use of filters to see through haze dust or smoke. These filters may be installed in the nanosatellites or if multispectral imaging is employed, this filtering can be applied in post processing.

Filters or filtering having filter bands of 2 to 2.4 microns combined with 1.75 to 1.79 microns and 0.52 to 0.6 microns allows penetrating through atmospheric particles and smoke. Water shows as blue. Hot parts of boats such as motors and emissions from funnels will appear red.

Filters or filtering having filter bands of 2 to 2.4 microns combined with 1.55 to 1.75 microns and 0.63 to 0.69 microns allows penetrating atmospheric particles, smoke and haze. The almost complete absorption of Mid-IR bands in water, ice and snow provides well defined coast lines and highlighted sources of water within the image which is useful for fishing surveillance. Water is black or dark blue which gives a high contrast with boat images. The heat from motors or funnels can be picked up by the Mid-IR bands and can appear in shades of red or yellow.

A further improvement in efficiency can be obtained by using difference images. As the aim is to search, find and track fishing vessels that are usually moving, difference images created from properly scaled and registered images will remove all stationary information. Registration by rotation and scaling can be done using visible landmarks in the images, e.g. special beacons or specific and easily identified structures. Yet another advantage of the constellation 20 of low earth orbit nanosatellites with an inclination less than 25°, e.g. 10 to 15° where nanosatellites 22, 24 traverse the relevant regions over Indonesia with spacings of a few minutes is that the differences between the images of one nanosatellite 22, 24 to the next are small. For example, if the mass of cloud 10 in Figure 2 is produced by an underlying mountainous region the cloud will stay in place for many hours. This part of the image can therefore be ignored - at least where the landmass is. Hence, a leading nanosatellite 22 can produce difference images only of regions of sea where there is a movement and transmit this highly reduced information to the following nanosatellite 24 which can create further difference images. The bandwidth requirements are low and acquisition and processing can be fast.

The cloud mass definitions, however delivered, can be used by following nanosatellites 22, 24 to optimise their pointing directions to obtain the most useful images on each fly-by or such instructions can be obtained from a ground station 25. This makes dynamic optimisations of satellite attitude and image footprint based on the content of the difference images possible, as the difference images will eliminate static parts of the images and will concentrate attention on moving parts including boats that meet a requirement of a speed above 0.5 knots, e.g. 10 knots or less, 8 knots or less and 4 knots or less.

Optionally, the nanosatellites 22, 24 can, be adapted to transmit and receive "Synthetic aperture radar" especially nano-SAR images. As the SAR device on board the nanosatellite moves, the antenna location relative to the target changes over time. Signal processing of the recorded radar echoes allows it then to combine the recordings from the multiple antenna locations - this forms the synthetic antenna aperture, and allows it to create finer resolution images than what would be possible with the given physical antenna aperture. These images may then also be used to search for illegal fishing vessels; e.g. nano-SAR images may be analysed alone using similar techniques of feature recognition or the nano-SAR images may be analysed in combination with other camera images.

In addition the on-board image processing in the nanosatellite 22, 24 or in a ground station 25 can track the location of ships and analyse the images by pattern recognition to detect typical trajectories of ships while they are fishing or when they are unloading fish at sea by transhipment. Libraries of typical trajectories when carrying out types of fishing can be used for pattern recognition of identified trajectories. An example is long lining. This includes first setting units or baskets connected together with a buoy at each connection. Branch lines can be attached to the main line while casting the line. The vessel will be steaming at between perhaps 9.5 knots and 11.5 knots at this time. The longline is paid out from the aft storage wells on the upper deck. It takes about five or six hours to complete each set. After the last buoy is set, the crew retire for about four hours before the start of the hauling operation. Whereas a fishing vessel may be picked up by visual cameras on board the nanosatellite 22, 24, the disturbance of the water caused by interaction between the buoys and waves can be picked up by SAR imaging.

Hauling usually takes at least a full day. The vessel steams at an average speed of about 6 knots, with the line retrieved over the starboard side. When a large fish is detected on a line, the vessel slows and may turn to starboard to follow the fish. When the fish is brought alongside the vessel, a gaff or a harpoon is used to land it, preferably avoiding spearing the fish in the meat part. During these operations the vessel will slow, maybe stop and may make turning motions.

It is clear from the above description that this form of fishing will require a fishing boat to perform a particular trajectory which can be used to identify a fishing operation. Typical trajectories of this type can be stored in a library of fishing trajectories and used for pattern recognition. The nanosatellites 22, 24 may include one or more on-board digital camera systems with a resolution able to detect ships. Such cameras may operate in the visible spectrum or IR, or UV or multispectral spectra and such digital cameras may be used either alone or in combination. An IR camera can capture images through a cloud layer and can detect heat signatures from a motor powered ship, e.g. at night when other cameras are not useful.

The nanosatellites 22, 24 and/or the ground stations 25 can analyse images by making use of known landmarks or beacons which can be seen in images from different sources such as from nanosatellites 22, 24, ground station 25, 29, surveillance aircraft 26 or vessels 28, or buoys 27. These landmarks or beacons may be used to register images with each other and to improve the completeness of the images and geographical accuracy. In particular the nanosatellites 22, 24 and/or the ground stations 25, 29 are adapted to analyse images and to associate a transponder signal such as an AIS signal with a certain vessel and/or with a stationary maritime indicator and to track the motion of this vessel based on such data.

The nanosatellites 22, 24 and/or the ground stations 25, 29 are adapted to execute feature recognition algorithms and apply these to the captured images to identify ships and optionally landmarks and this image data is time stamped and can be linked to GPS position data. By knowing the exact time in the orbit and the location and orientation of the nanosatellite 22, 24, the location of any image can be determined.

From successive images, the nanosatellites 22, 24 and/or the ground stations 25 can obtain information on the speed and heading of a ship. The nanosatellites 22, 24 and/or the ground stations 25 can analyse images to determine changes in the shape and size especially the apparent width of boats as an increase in apparent width can be an indication that fish are being unloaded by transhipment to another ship which requires the ships to be so close together that they can be observed as one vessel by the feature recognition algorithms.

### Transponder signals

Not all fishing vessels are equipped with the AIS system, and identification of those ships without AIS signature can be done through visible imaging of vessels. A combination of data from a transponder system such as the AIS system and images captured by the nanosatellites 22, 24 allows more accurate interpretation of unidentified vessels. The nanosatellites 22, 24 have a transponder identifier such as AIS receiver 49. The nanosatellites 22, 24 are adapted to transmit data and communicate with other nanosatellites in the constellation as well as with ground stations. Each nanosatellite may be programmed and configured to link to other nanosatellites within range and forward data to these nanosatellites. This can be used to transmit to a ground station for example at times when a link between any nanosatellite and the ground cannot be made as the ground station is not within communications range of a particular nanosatellite. Data from transponder signals such as AIS transmissions received by the nanosatellite system can be compared to data derived from the captured images either with on-board processing in a nanosatellite 22, 24 or in a ground station 25. Information derived from ships, such as speed, heading, ship size, ship type, can be compared on-board a nanosatellite 22, 24 or in a ground station 25 with the same types of data determined from previously captured images to identify when an AIS identifier has changed ship, for example.

Ship-borne AIS signals are broadcast over a VHF channel using a TDMA technique. Time slots are divided between ships within an organized area. Illegal fishing boats may attempt to disrupt AIS signals by deliberately sending them at the same time from different vessels. AIS signals may also be sent by stationary navigational markers. Hence illegal fishing vessels may detect AIS signals from stationary navigational markers and broadcast at the same time. Interference between transmissions can occur but collision resolution algorithms exist to deal with this problem.

The nanosatellites 22, 24 are preferably placed in low earth orbits, i.e. below the 1000 km altitude, e.g. at 400 to 500 km and such nanosatellites are able to receive S-AIS transmission and can make use of a narrow field of view antenna array to reduce the possibility of collision from valid AIS transmissions. Deliberately colliding AIS signals are a first indication of illegal activity.

By communication between nanosatellites 22, 24 and with the ground stations 25, transponder signals such as AIS transmissions can be tracked by the nanosatellites 22, 24 and the association of a vessel with an AIS signature may be passed from one nanosatellite22, 24 to the next in the constellation 20. In particular the ground station network can process data from multiple sources in order to be more certain that a given AIS signal is associated with a certain vessel.

The ground stations 25, surveillance buoys 27, aircraft 26 and vessels 28 and the nanosatellites 22, 24 may be equipped with Vehicle Monitoring System (VMS) sensors such as AIS, VTS and GMDSS and can include modems able to operate with different technical standards. A vessel 28, aircraft 26, nanosatellite 22, 24, buoy 27 or ground station 25 required to have some or all of these capabilities may share some on-board equipment, such as computers, displays, or antennas.

The nanosatellites 22, 24 and/or the ground stations 25 and/or buoys 27, surveillance boats 28 and surveillance aircraft 26 are preferably adapted to detect transponder signals such as AIS signals or custom identifications. For example, a low-gain or high-gain or other type of directional antenna or a phased antenna array can be used by the nanosatellites 22, 24 and/or the ground stations 25 and/or buoys 27, surveillance boats 28 and surveillance aircraft 26 to detect AIS signals or custom identifications of a similar nature, or mobile telephones, public radio etc.

### Buoys

Buoys (or offshore platforms) 27 that can be used with the present invention preferably have a submersible housing containing image sensors such as cameras, a microprocessor running a suitable operating system such as Windows^{™} of Microsoft Corp. or Linux and memory, software to operate the cameras and take images and to provide telecommunications and telemetry and a front end and an antenna to transmit to, or receive from a ground station 25 or a nanosatellite 22, 24. The image sensors or cameras can include any of, some of or all of panchromatic, optical, black/white, IR, and UV cameras or image sensors. A buoy 27 can be solar powered by a solar panel with a battery. The buoy 27 may also have a reaction wheel or gyroscopic camera control to stabilise images. A buoy 27 may also include a receiver for transponder signals such as AIS and location signals such as GPS as well as a receiver for cellular wireless signals from mobile phones signals or from public radio. The buoy 27 may also transmit its own transponder signal such as an AIS. A buoy 27 may be adapted to form an ad hoc network with other buoys 27 and/or ground based stations 25, 29. Using triangulation techniques a combination of buoys 27 and ground stations 25, 29 can localise an emitter of radio energy thus locating a vessel such as a fishing vessel. Buoys 27 may also be equipped with hydrophones to pick up the detonation of explosive charges used in illegal fishing.

### Surveillance boats or aircraft

Surveillance boats 28 or aircraft 26 that can be used with the present invention preferably have similar equipment to that of a buoy, e.g. image sensors such as cameras, a microprocessor running a suitable operating system such as Windows^{™} of Microsoft Corp. or Linux and memory, software to operate the cameras and take images and to provide telecommunications and telemetry and a front end and an antenna to transmit date to a ground station 25 or a nanosatellite 22, 24. The image sensors or cameras can include any of, some of or all of optical, panchromatic, black/white, IR, and UV cameras or image sensors. A surveillance boat 28 or aircraft 26 will have its own power supply. A surveillance boat 28 or aircraft 26 may also have reaction wheel or gyroscopic camera control to stabilise images. A surveillance boat 28 or aircraft 26 may also include a receiver for transponder signals such as AIS and location signals such as GPS as well as a receiver for cellular wireless signals from mobile phones signals from public radio. A surveillance boat may also transmit its own transponder signal such as AIS. A surveillance boat 28 or aircraft 26 may have a receiver for receiving signals from an emitter of radio waves such as radar. They may also have their own radar transmitter and receiver. Surveillance boats 28 may also be equipped with hydrophones to pick up the detonation of explosive charges used in illegal fishing.

Surveillance boats 28 or aircraft 26 may have displays and software to display chart images provided by ground stations25 and/or nanosatellites 22, 24 showing any of, or some of or all of cloud cover, locations of suspect vessels, headings and speeds of suspect vessels, position of buoys as well as conventional maritime information.

### Image processing and data handling

### Search mode

A nanosatellite 22, 24 can have an imaging footprint of several tens of km², for example, i.e. an image is taken for a region of 40 km x 40 km. With a ground speed of about 7 km per second this means capturing an image every 6 seconds. With SAR images, the synthetic antenna aperture can be set differently from the other cameras and imaging devices.

With each new satellite placed into orbit technologies will be updated and hence radar imaging and/or camera performance will be increased. Increasing capabilities of cameras means better resolution and more data to process. In a search mode the nanosatellites 22, 24 will be attempting to find an illegal fishing vessel and to search the complete region effectively. The nanosatellites 22, 24 are adapted to cover as much of the search area as possible. For Indonesia this means, for example, up to 25 parallel tracks of images each 40 km wide or 50 overlapping parallel tracks. In accordance with embodiments of the present invention the nanosatellite constellation 20 is adapted to optimise imaging time, image processing time and transmission and reception of images. The length of the region to be monitored over Indonesia is 4000 km or more long which means taking about 100 images during each flyby with the highest resolution capable for a camera suitable for inclusion in a nanosatellite. In accordance with embodiments of the present invention data reduction techniques are used. Processing tasks may be shared between nanosatellites 22, 24 and ground stations 25 for more efficient use of system resources.

Embodiments of the present invention can make use of one, some or all of:
- Noise reduction
- Image filtering techniques
- Resolution enhancement
- Contrast enhancement
- General image processing algorithms

Images captured by a nanosatellite will include noise. For example, speckle from any wave motion will tend to cancel out when consecutive images are superimposed whereas images of moving vessels will tend to reinforce as the movement of the ship will be visible in a comparison of the images. Thus use of inter-satellite communications and multiple on-board image analysis allows an image of a vessel to be improved by noise reduction algorithms and hence to obtain a more accurate value of the length and width of a vessel.

In order to reduce the use of telecommunications and the bandwidth needed between nanosatellites 22, 24 and ground stations 25, embodiments of the present invention provide on-board image analysis and inter-satellite communications as well as nanosatellite to ground communications. Also the computer power can be increased by the use of more than one nanosatellite 22, 24 to share processing power by passing relevant parts of images between nanosatellites 22, 24 to continue the processing of that image part. The computer power can also be increased by the use of communications between a nanosatellite 22, 24 and a ground station 25 to share processing power by passing relevant parts of images between one or more nanosatellites 22, 24 and a ground station 25 to continue the processing of that image part. The nanosatellites 22, 24 of the constellation 20 are preferably adapted to be able to be formed into an ad hoc network with or without one or more ground stations 25.

The present invention includes the use of classifiers in image processing. The imaging processing can include image feature classifiers. Image processing classifiers can use a box filter such as a Haar filter whereby the box or Haar filters, e.g. having two relatively simple intensity values (e.g. black and white) can be used as a convolution filter of an image in a variety of orientations and filter directions. The computational cost of convoluting a simple box (limited size) filter with an image is low.

A classifier is generally binary and distinguishes between useful and not useful information in the image. A first classifier can be the presence or absence of a transponder signal such as an AIS signal. The reception of an AIS (or lack of it) at a satellite and image data obtained at a ground station 25 or a nanosatellite 22, 24 can provide information regarding vessels lacking or deliberately switching off an AIS signal. When the AIS signal appears genuine and is not a fishing vessel then information relating to this vessel in the image can be removed. A second classifier can be movement. From the image data moving vessels can be determined using feature recognition algorithms when comparisons are made over time, e.g. using difference images. Stationary objects are probably not fishing. Comparing the received AIS transmissions to the image data in a ground station 25 or a nanosatellite 22, 24 allows determination of any vessel not transmitting the AIS signal which may be a vessel operating illegally. Ground stations 25 can notify surveillance aircraft 26 or boats 28 in the area to investigate.

A third classifier can be a binary classifier which distinguishes images of sea vessels from non-vessels. This classifier can be trained before launch and also offline when the nanosatellite 22, 24 is traversing a part of the orbit which is not above the target region of Indonesia. For example, during online detection processing a window is rastered digitally across the image and any recognised potential vessel is classified according to size and classified as vessel or background. The size of the vessel can be estimated/measured by extracting the contours of the vessel with image segmentation techniques. Fishing vessels will usually be smaller in length than container ships or tankers. Thus, a length parameter can be used as a further classification parameter. Waves extend perpendicularly to the direction of movement whereas boats extend in the direction of motion. Hence, a fourth classifier can be derived from a calculation of the ratio of length to width in a moving object present in an image. This fourth classifier can classify between waves and non-waves.

Comparison of images captured by a sequence of nanosatellites 22, 24 also allows the speed of the vessel to be calculated and its heading and this can be used as a fifth classifier. Vessels that are fishing will usually be travelling at above 0.5 knots, e.g. and 10 knots or less, 8 knots or less and between 0.5 and 4 knots whereas other motorised vessels will tend to be travelling at 8 to 10 knots or faster. Thus, a further classification parameter is a speed above 0.5 knots and optionally 10 knots or less or 8 knots or less or 4 knots or less. In addition, colour in the images may be used as a further classifier to identify vessels - and to eliminate some types of drifting refuse for example.

Vessels longer than 7 meters can be identified quite reliably from optical images by such methods. Inter-satellite communications and/or satellite to ground communications in combination with image correlation techniques as indicated above can also eliminate some types of false positives. Waves breaking over a reef would remain at the same position and hence would be eliminated as not meeting the greater than 0.5 knot requirement. Travelling waves that caused a false positive would also disappear with time or would change their shape which generally would not happen with a vessel underway and, hence, change in shape can also be used as a classification parameter.

Where an identification signal such as a transponder identification signal such as AIS is received for the vessel, the vessel may be identified further and may be eliminated from the classification list if the vessel is clearly of a different type. Hence, a transponder signal such as AIS can also be used as a classification parameter.

The inter-satellite communications and on-board image analysis allows a classification list to be constructed and passed from nanosatellite to nanosatellite with an increasing accuracy. This list will give the last known position, and any, some or all of a predicted heading, trajectory and speed and a length estimate plus any information obtained from an identification signal such as a transponder identification signal such as AIS - or the lack of such a signal.

It is assumed that illegal fishers will adapt their ways once there is knowledge of the nanosatellite surveillance techniques as disclosed in this invention. Therefore, the nanosatellites 22, 24 in accordance with embodiments of the invention are adapted to allow updating firmware over the air. In particular, classification algorithms as described above can be implemented as neural networks. Such networks can be trained to take into account changes. Thus, the nanosatellites 22, 24 and/or the ground stations 25 may be equipped with neural networks for classification capable of improving accuracy by learning.

### Tracking mode

In tracking mode a suspect vessel can be tracked by more than one nanosatellite 22, 24. To increase accuracy the same image can be obtained by different cameras in different nanosatellites 22, 24 and processed by a series of nanosatellites 22, 24. Each nanosatellite 22 can communicate at least with the next nanosatellite 24. Thus, a nanosatellite 22 currently above the target region can transmit classified vessel images with a record of their exact location on earth to the following nanosatellite 24. The following nanosatellite 24 will then orient itself in advance so that an on-board camera can capture the same image as the current nanosatellite 22 when it flies by.

An example of a method to tracking vessels of the type that emit an identifying signal includes the system receiving, at least one nanosatellite 22, 24 of a constellation 20 of low earth orbit nanosatellites 22, 24 with an inclination less than 25°, preferably 10° to 15°, at least one of the identifying signals such as a transponder signal such as AIS from sea going vessels. The constellation 20 of low earth orbit nanosatellites 22, 24 also collects image data of a region in which the vessels are sailing. If the AIS can be parsed, then a first decision can be made as to whether a suspect vessel cannot be a fishing boat based on its AIS data and hence is to be removed from the classification list, or whether it could be a fishing boat operating illegally. A location of each of the vessels can be acquired from the identifying signals transmitted by the vessel or by other means such as visual images captured by one or more of the nanosatellites 22, 24, or from the signals received by buoys 27, shore radar ground stations 29, surveillance ships 28 or aircraft 26 or combinations of these. Tracking of at least one of these vessels can be started using the location data of the vessel as a start. At least one of the identifying signals, the image data, or the position data, can optionally be received at at least one ground station 25. The ground station 25 can then output at least the location data to a ground network to other ground stations 25, 29, to surveillance boats 28 or aircraft 26 or to a nanosatellite 22, 24 in the constellation 20 of nanosatellites 22, 24. To do this the system is adapted to resolve collisions between multiple received transponder signals from multiple vessels. Where an image is lost due to cloud cover or dust or ash clouds, tracking may still be possible using SAR images.

The steps of analysing the image data or at least image pre-processing can be performed in one or more nanosatellites 22, 24 as described above. This analysis can be done to identify a potential illegal fishing vessel. Aircraft 26 or boats 28 can be despatched to then investigate the suspect boat at close range. The identification can include a matching step in which the identification signal of the suspect vessel can be compared with databases and previous historical records of the activities of this vessel. In addition the identification step can also include identifying vessels in the image data that do not transmit an identification signal. As indicated above, the identifying signal can be one of an Automatic Identification System (AIS) signal or VTS or GMDSS or Vehicle Monitoring System (VMS) signals.

Once illegal fishing has been detected with some certainty, high resolution images (in the visual spectrum or with IR) can be requested from high resolution cameras on board larger satellites such as WorldView, QuickBird, Pléiades, GeoEye, KompSat, EROS, Ikonos.

## Claims

1. A system for tracking seagoing vessels within a region wherein at least some of the seagoing vessels transmit an identifying signal, the system comprising:
a constellation of low earth orbiting nanosatellites orbiting around the Earth's equator, each nanosatellite being equipped with imaging equipment for imaging the Earth's surface and a receiver for receiving identifying signals of said vessels via a first transmission link; the nanosatellites having an inclination of less than 25°,
a second transmission link to at least one ground station for communicating with said constellation of nanosatellites wherein the second transmission link delivers data collected from said vessel transmissions and imaging data from the nanosatellites; and
a computer processor receiving input from said first and second transmission links and programmed to acquire and track positions of fishing vessels based on presence or lack of said identifying signals transmitted by said vessels and said imaging data from the nanosatellites.

2. The system of claim 1, where the at least one ground station is adapted to receive data from any of: ground based radar, wireless telecommunications data and/or visual images from surveillance ships, aircraft and/or buoys and is adapted to acquire and track positions of fishing vessels in addition to identifying signals transmitted by said vessels and imaging data from the nanosatellites.

3. The system of claim 1 or claim 2 wherein said data from said constellation of low earth orbit nanosatellites is spatially and temporally synchronized.

4. The system of any previous claim, wherein said data from any of: ground based radar, wireless telecommunications data and visual images from surveillance ships, aircraft and/or buoys and identifying signals transmitted by said vessels and imaging data from the nanosatellites, are registered with each other using landmarks.

5. The system of any previous claim, wherein when cloud cover is detected, the system is adapted to reconstruct nanosatellite images by use of data from any of: ground based radar, wireless telecommunications data and visual images from surveillance ships, aircraft and/or buoys.

6. The system of any previous claim, further comprising: an image capture device equipped on one or more of the nanosatellites taking image data of a region associated with said seagoing vessels; wherein the image data is transmitted over the second transmission link; wherein the computer processor is further programmed to: determine one or more of said vessels from the image data; and correlate the one or more of said vessels with their respective identifying signals.

7. The system of claim 6, wherein the computer processor is further programmed to identify suspect vessels, which are vessels determined in the image data but not having a respective identifying signal.

8. The system of any previous claim, wherein the identifying signal is an Automatic Identification System (AIS) signal, or similar.

9. The system of any previous claim, wherein the inclination is between 10° and 15°.

10. The system according to any previous claims wherein the low earth orbiting nanosatellites are adapted for inter-satellite communications.

11. The system according to claim 10, wherein a nanosatellite currently over the region is adapted to transmit surveillance data to a next nanosatellite in the constellation or to a ground station, the next nanosatellite being adapted to alter its orientation based on the received surveillance data before it flies over the region.

12. The system of claim 11 wherein the surveillance data comprises a difference image comprising the difference between an image taken by a nanosatellite currently over the region and a previous image.

13. The system according to claim 11 or claim 12 wherein the surveillance data includes cloud covered regions defined by contour pixels.

14. The system according to claim 12 or claim 13, wherein the difference image comprises the difference between cloud covered regions defined by contour pixels from an image taken by a nanosatellite currently over the region and cloud covered regions defined by contour pixels from a previous image.

15. A method of tracking seagoing vessels within a region wherein at least some of the seagoing vessels transmit an identifying signal, the method comprising:
imaging the Earth's surface from a constellation of low earth orbiting nanosatellites orbiting around the Earth's equator, each nanosatellite being equipped with imaging equipment, the nanosatellites having an inclination of less than 25°,
receiving identifying signals from said vessels via a first transmission link;
receiving data collected from vessel transmissions and imaging data from the nanosatellites at at least one ground station over a second transmission link for communicating with said constellation of nanosatellites; and
receiving input from said first and second transmission links and acquiring and tracking positions of fishing vessels based on presence or lack of said identifying signals transmitted by said vessels and said imaging data from the nanosatellites.
